# EUROPEAN PATENT APPLICATION

(11) **EP 3 321 517 A1**
(43) Date of publication of application: **16.05.2018**
(21) Application number: 17200522.5
(22) Date of filing: 08.11.2017
(51) Int. Cl.: F15B 13/08, F16K 27/00

(54) **MODULAR HYDRAULIC SUPPLY UNIT**

(30) Priority: 09.11.2016 IT 201600112806
(71) Applicant: Dinoil S.p.A., 36075 Montecchio Maggiore (VI) (IT)
(72) Inventor: MOIRAGHI, Guido, 36075 Montecchio Maggiore (VI) (IT)
(74) Representative: De Giorgi, Michele

(57) **Abstract**

Described is a modular hydraulic supply unit (10) comprising a plurality of hydraulic distributors (11) and first connectors (12) which have a male element (121) and a female element (122) configured in such a way that a male element (121) of a first of the first connectors can be coupled with a female element (122) of a second of the first connectors (12).

The hydraulic distributors (11) are equipped with at least one operating seat (13) comprising, along an engagement axis (B):
- a housing compartment (131) for housing the female element (122) and having an opening (132) through which to insert one of the first connectors (12);
- a through hole (133) through which can be inserted the male element (121);

The first connector (12) and the operating seat (13) are configured in such a way that when the first connector (12) is inserted in the operating seat (13), the female element (122) is housed in the housing compartment (131) and the male element (121) passes through the through hole (133) and protrudes from a second side (112) of the hydraulic distributor (11) to couple with another of the first connectors (12).

## Description

This invention relates to a modular hydraulic supply unit.

More specifically, this invention relates to a modular hydraulic supply unit comprising a plurality of hydraulic distributors grouped together in a packet.

This innovative modular hydraulic supply unit allows for modification, in terms of the combination of distributors which it comprises, and can undergo maintenance in a much easier manner than the traditional modular hydraulic supply units.

These generally comprise a series of hydraulic distributors joined together in a packet by threaded tie bars.

Each traditional hydraulic distributor comprises through holes designed to be passed through by tie bars.

The latter are generally joined, at a relative first end, to a head plate from which they protrude in a mutually parallel fashion.

The second end of the tie bars is threaded for coupling to locking nuts or to a plate with threaded holes.

From a functional point of view, these traditional hydraulic supply units are assembled by inserting on the tie bars a plurality of hydraulic distributors selected according to the relative application.

The hydraulic distributors are then blocked in a packet by clamping the nuts to the second ends of the tie bars.

These traditional supply units have the drawback of not having a very flexible structure; in fact, if a hydraulic distributor, which forms part of it, must be removed and not replaced, the tie bars are excessively long to allow the blocking of the remaining hydraulic distributors in a packet.

Moreover, if one or more of the hydraulic distributors must be removed the entire packet is, in fact, freed after removal of the locking nuts.

The drawback underpinning this invention is to make the structure of a modular hydraulic supply unit more flexible and simpler to modify.

The main aim of this invention is to make a hydraulic supply unit which offers a solution to this problem by overcoming the above-described drawbacks of the traditional hydraulic supply units described above.

Within the scope of such a task, it is the aim of this invention to provide a modular hydraulic supply unit in which the number and the sequence of the relative hydraulic distributors can be easily modified without requiring adaptations to the unit itself.

Another aim of this invention consists in making a modular hydraulic supply unit which allows one or more of the relative hydraulic distributors to be removed without this requiring the dismantling of the entire unit.

Yet another aim of this invention is to provide a modular hydraulic supply unit which, in use, has a structural stability at least equal to that of the traditional modular hydraulic supply units.

This aim, as well as these and other aims which will emerge more fully below, are attained by a modular hydraulic supply unit according to appended claim 1.

Detailed features of the modular hydraulic supply unit according to the invention are indicated in the corresponding dependent claims.

Further features and advantages of the invention will emerge more fully from the description of a preferred but not exclusive embodiment of a modular hydraulic supply unit, illustrated by way of non-limiting example in the accompanying drawings, in which:
- Figure 1 is a plan view from above, partially exploded, of a modular hydraulic supply unit according to this invention;
- Figure 2 illustrates a schematic and partially cross-sectioned detail of a modular hydraulic supply unit according to this invention;
- Figure 3 is a perspective view, partially exploded, of a first embodiment of a modular hydraulic supply unit according to this invention;
- Figure 4 is a perspective view, partially exploded, of a second embodiment of a modular hydraulic supply unit according to this invention;
- Figure 5 is a perspective view of a variant of the actuating unit of Figures 1 to 4 according to this invention.

With particular reference to the above-mentioned drawings, the numeral 10 denotes in its entirety a modular hydraulic supply unit which in a traditional manner comprises a plurality of hydraulic distributors 11.

Each hydraulic distributor 11 has, in a traditional manner, a substantially parallelepiped shape with two sides 111, 112 opposite and parallel to each other.

A series of hydraulic distributors 11 can be formed by placing them alongside each other, each with a first side 111 abutting a second side 112 of the adjacent hydraulic distributor 11.

A supply unit 10 according to this invention has a particular peculiarity in that it comprises first connectors 12 extending along an operating axis A, advantageously rectilinear, along which each of the first connectors 12 has a male element 121 and a female element 122.

The first connectors 11 are configured in such a way that a male element 121 of a first of the first connectors 12 can be coupled with a female element 122 of a second of the first connectors 12.

Each of the hydraulic distributors 11 is equipped with at least one operating seat 13 comprising, along an engagement axis B, advantageously rectilinear:
- a housing compartment 131 configured for housing the female element 122 and having an opening 132 through which to insert one of the first connectors 12 from a first side 111 of the hydraulic distributor 11;
- a through hole 133 extending from a bottom 134 of the housing compartment 131, towards the second side 112 and through which can be inserted the male element 121.

The female element 122 and the housing compartment 131 are preferably configured in such a way that the housing compartment 131 can contain completely the female element 122.

The first connector 12 and the operating seat 13 are configured in such a way that when the first connector 12 is inserted in the operating seat 13, the female element 122 is housed in the housing compartment 131 and the male element 121 passes through the through hole 133 and protrudes from the second side 112 of the hydraulic distributor 11 protruding from the latter to engage the female element 122 of a fist connector 12 engaged with another hydraulic distributor 11 to couple the two above-mentioned hydraulic distributors 11.

Basically, a supply unit 10 according to this invention is modular and allows assembly of a plurality of hydraulic distributors 11 in a simple and fast fashion according to the relative application needs.

In fact, each hydraulic distributor 11 is fixed to another hydraulic distributor 11 in an autonomous manner with respect to any further hydraulic distributors 11 thanks to the first connectors 12 which, operatively, connect together only two successive hydraulic distributors 11.

In this way, it will be possible to remove and/or replace, as desired, one or more hydraulic distributors from a series of hydraulic distributors 11 forming a supply unit 110, according to this invention, without this requiring the dismantling of the remaining hydraulic distributors 11.

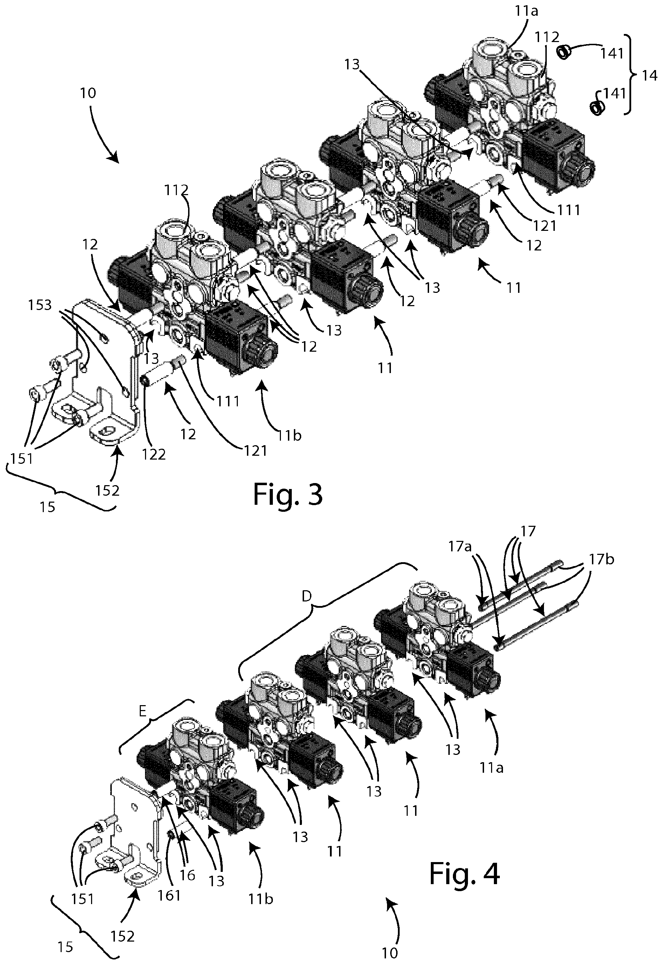

In a first embodiment of this invention, illustrated by way of non-limiting example in Figures 3, advantageously the supply unit 10 advantageously comprises:
- a first head unit 14 designed to make contact with a second side 112 of the first 11 a of the hydraulic distributors 11 which form a series of hydraulic distributors 11, and configured in such a way that male elements 121 of the first connectors 12 can be coupled with the first head unit 14 to lock to the latter this first hydraulic distributor 11 a;
- a second head unit 15 designed to make contact with a first side 111 of the last 11 b of the hydraulic distributors 11 which form the series, and configured in such a way that female elements 122 of first connectors 12 can be coupled with the second head unit 15 to lock to the latter the last hydraulic distributor 11 b.

Preferably, the first head unit 14 comprises, advantageously, nuts 141 designed to couple with the male elements 121 and the second head unit 15 comprises screws 151 designed to couple with the female elements 122.

Each of the head units 14, 15 advantageously comprises a plate of which only the one forming part of the second head unit 15 is illustrated in the drawings and labelled 152.

In general, the plates are equipped with through openings 153 designed to be passed through by the male elements 121 or by the screws 151 for being fixed to the hydraulic distributors 11 which form the first and the last of the series.

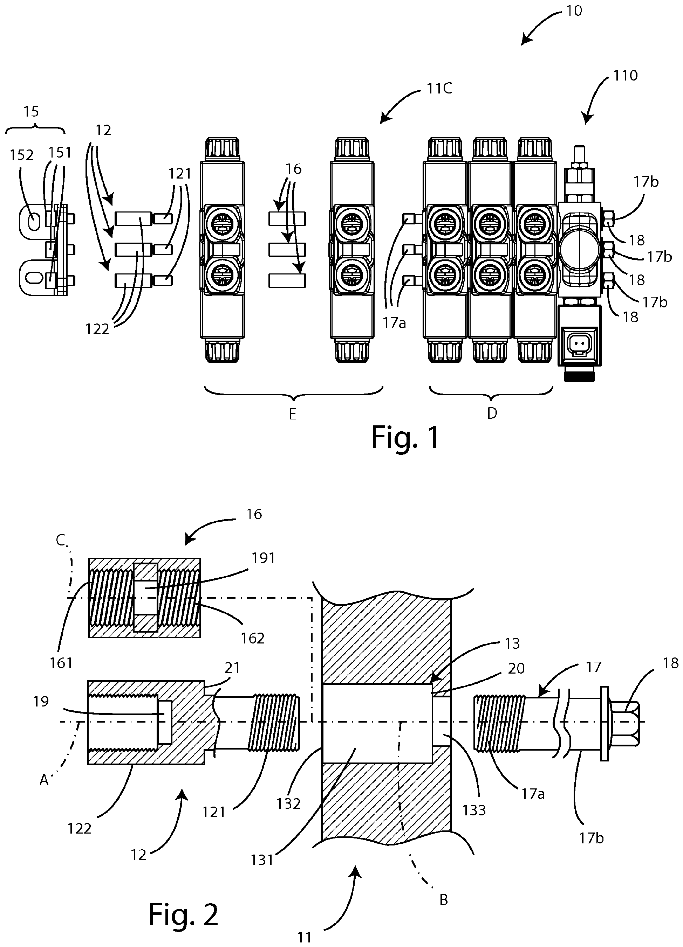

In a second embodiment of this invention, illustrated by way of non-limiting example in Figures 1 and 4, the supply unit 10 advantageously comprises:
- second connectors 16 having, along an axis of extension C, a first female element 161 designed to couple with male elements 121 of the first connectors 12 and a second female element 162, opposite to the first female element 161;
- tie bars 17 designed to be inserted in a through fashion through the through holes 133 of the hydraulic distributors 11 and having a first end 17a which can be coupled with the second female element 162;
- an end element which is fixed or can be fixed to a second end 17b of the tie bars 17 for forming an abutment for the hydraulic distributors 11.

The second connectors are advantageously designed in such a way that they can be housed completely in the housing compartment 131 of the operating seats 13 of the hydraulic distributors.

The end element will, for example, consist of a plate, not illustrated, provided with holes which can be engaged by the second ends 17b of the tie bars 17 and designed to abut the second side 112 of the first hydraulic distributor 11 of the series.

The holes of the plate can be threaded and/or nuts can be provided which can be coupled with the second ends 17b of the tie bars which will be correspondingly threaded.

Alternatively, the end element can consist of a plurality of nuts 18 directly lockable on the second ends 17b of the tie bars 17, protruding from the through holes 133 from the first hydraulic distributor 11 of the series, as shown, for example, in the embodiment of Figure 1.

In the same way as the first embodiment described above, the second distributor unit according to the second embodiment also preferably comprises a second head unit 15 as described above.

Advantageously, the tie bars 17 are designed to be inserted through a first group D of hydraulic distributors 11 to which can be fixed further hydraulic distributors 11 to form a second group E to complete the supply unit 10.

Operatively, the first group D is assembled by inserting the tie bars 17 through the hydraulic distributors 11 to form the first group and locking on the second ends 17b the nuts 18 to define an abutment for the first 11 a of the hydraulic distributors 11.

Clearly, the first element of the first group D, instead of being a hydraulic distributor, can be a different component which in Figure 1 is generically labelled 110.

Successively, second connectors 16 are inserted in the operating seats 13 of a further hydraulic distributor, labelled 11 c in Figure 1 and locked to the first end 17a of the tie bars 17 so as to block in the form of a packet the first group D of hydraulic distributors 11, thus fixing the further hydraulic distributor 11c.

Therefore, the second hydraulic distributor 11 b can be fixed to complete the supply unit 10 inserting in its operating seats 13 the first connectors 12 locking the male elements 121 in the first female elements 161 of the second connectors 16.

The second head unit 15 will then be applied, locking the plate 152 to the second hydraulic distributor 11 b using the screws 151 locked to the female elements 122 of the first connectors 12.

In order to facilitate the fitting and removal, the hydraulic distributors 11 comprise clamping means, designed to be engaged by a clamping tool.

In detail, the clamping means advantageously comprise an Allen screw 19 which can be engaged by an Allen key.

This Allen screw 19 is preferably positioned on a bottom wall of the female element 122.

The second connectors 16 advantageously also comprise an Allen screw 191 positioned in such a way that it can be engaged by an Allen key through the first female element 122 and/or through the second female element 122.

Structurally, the operating seat 13 is preferably equipped with an inner shoulder 20 designed to be engaged by an edge 21 of the first connectors 12.

The shoulder 20 and the edge 21 are configured in such a way that when a first of the first connectors 12 is inserted in the operating seat 13 of one of the hydraulic distributors 11 and it is coupled to a second of the first connectors 12, the hydraulic distributor 11 is fixed to the latter.

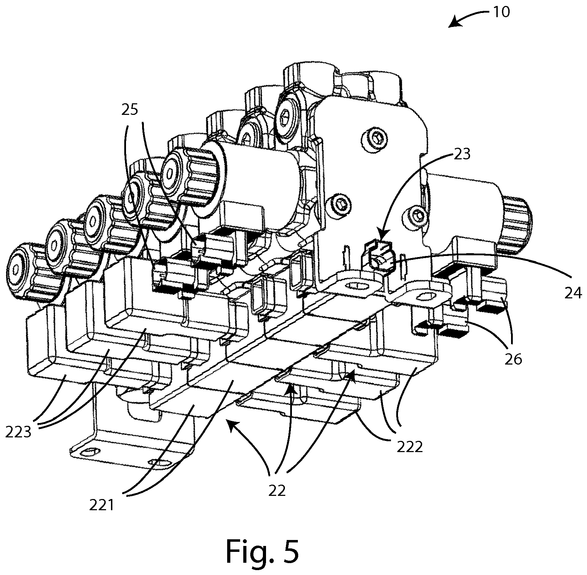

With reference in particular to Figure 5, in a preferred variant embodiment of this invention, the supply unit 10 advantageously comprises, for each hydraulic distributor, an electronic connection block 22 electronically connected to the relative hydraulic distributor 11 for transmitting to it electronic actuation signals.

The electronic connection block 22 is equipped with a plug and a socket positioned in such a way that when two hydraulic distributors 11 are coupled, as described above, the plug of the electronic connection block 22 of the first of the hydraulic distributors 11 is coupled with the socket of the electronic connection block 22 of the second hydraulic distributor 11.

Advantageously, the first head unit 14 and/or the second head unit 15 are equipped with a general connector 23 which comprises:
- a first connection element, not visible in the accompanying drawings, preferably in the form of a plug or a socket, designed to be coupled electronically to an electronic connection block 22;
- a second connection element 24 designed to be electronically connected to an apparatus designed to electronically control the hydraulic distributors 11 of the supply unit 10. In this way, the supply unit 10 is modular even from the electronic point of view.

Preferably, the electronic connection blocks 22 and the general connector 23 are configured to be connected to a CAN (Controller Area Network). Advantageously, the electronic connection blocks 22 comprise:
- a central connector 221, equipped with the plug and the socket and advantageously fixed below and centrally to the corresponding hydraulic distributor 11;
- two side connectors 222, 223 protruding on two opposite sides of the central connector 221 and configured for connecting to corresponding connectors 25, 26 of the hydraulic distributor 11.

The invention as it is conceived is susceptible to numerous modifications and variants, all falling within the scope of protection of the appended claims.

Further, all the details can be replaced by other technically-equivalent elements.

In practice, the materials used, as well as the contingent forms and dimensions, can be varied according to the contingent requirements and the state of the art.

Where the constructional characteristics and the technical characteristics mentioned in the following claims are followed by signs or reference numbers, the signs or reference numbers have been used only with the aim of increasing the intelligibility of the claims themselves and, consequently, they do not constitute in any way a limitation to the interpretation of each element identified, purely by way of example, by the signs or reference numerals.

## Claims

1. A modular hydraulic supply unit (10) comprising a plurality of hydraulic distributors (11) and **characterised in that** it comprises first connectors (12) extending along an operating axis (A) along which each of the first connectors has a male element (121) and a female element (122) configured in such a way that a male element (121) of a first of the first connectors can be coupled with a female element (122) of a second of the first connectors (12);
each of the hydraulic distributors (11) being equipped with at least one operating seat (13) comprising, along an engagement axis (B):
- a housing compartment (131) configured for housing the female element (122) and having an opening (132) through which to insert one of the first connectors (12) from a first side (111) of the hydraulic distributor (11);
- a through hole (133) extending from the housing compartment (131) and through which can be inserted the male element (121);
the first connector (12) and the operating seat (13) being configured in such a way that when the first connector (12) is inserted in the operating seat (13), the female element (122) is housed in the housing compartment (131) and the male element (121) passes through the through hole (133) and protrudes from a second side (112) of the hydraulic distributor (11), which is opposite the first side (111), to couple with another of the first connectors (12) in such a way that, when they are coupled, the hydraulic distributor (11) is clamped to the other first connector (12).

2. The supply unit (10) according to claim 1, **characterised in that** it comprises:
- a first head unit (14) designed to make contact with a second side (112) of the hydraulic distributors (11) and configured in such a way that male elements (121) of the first connectors (12) can be coupled with the first head unit (14) to lock to the latter one of the hydraulic distributors (11);
- a second head unit (15) designed to make contact with a first side (111) of the hydraulic distributors (11) and configured in such a way that female elements (122) of the first connectors (12) can be coupled with the second head unit (15) to lock to the latter one of the hydraulic distributors (11).

3. The supply unit (10) according to claim 2, **characterised in that** the first head unit (14) comprises nuts (141) designed to couple with the male elements (121) and the second head unit (15) comprises screws (151) designed to couple with the female elements (122); at least one of the head units (14, 15) comprising a plate (152) provided with through openings (153) designed to be passed through by the male elements (121) or by the screws (151).

4. The supply unit (10) according to claim 1, **characterised in that** it comprises:
- second connectors (16) having, along an axis of extension (C), a first female element (161) designed to couple with male elements (121) of the first connectors (12) and a second female element (162);
- tie bars (17) designed to be inserted in a through fashion through the through holes (133) of the hydraulic distributors (11) and having a first end (17a) which can be coupled with the second female element (162);
- an end element which is fixed or can be fixed to a second end (17b) of the tie bars (17).

5. The supply unit (10) according to any one of the previous claims, **characterised in that** the hydraulic distributors (11) comprise clamping means, designed to be engaged by a clamping tool.

6. The supply unit (10) according to claim 5, **characterised in that** the clamping means comprise an Allen screw (19) which can be engaged by an Allen key, the Allen screw (19) being positioned on the bottom wall of the female element (122).

7. The supply unit (10) according to claim 4 and any one of claims 5 and 6, **characterised in that** the second connectors (16) comprise an Allen screw (20) positioned in such a way that it can be engaged by an Allen key through the first female element (122) and/or through the second female element (122).

8. The supply unit (10) according to any one of the previous claims, **characterised in that** the operating seat (13) is equipped with an inner shoulder (20) designed to be engaged by an edge (21) of the first connectors (12), the shoulder (20) and the edge (21) being configured in such a way that when a first of the first connectors (12) is inserted in the operating seat (13) of one of the hydraulic distributors (11) and it is coupled to a second of the first connectors (12), the hydraulic distributor (11) is fixed to the latter.

9. The supply unit (10) according to any one of the previous claims, **characterised in that** it comprises, for each of the hydraulic distributors (11), an electronic connection block (22) connected electronically to the relative hydraulic distributor (11) for transmitting to it electronic actuation signals; the electronic connection block (22) being equipped with a plug and a socket positioned in such a way that when two hydraulic distributors (11) are coupled the plug of the electronic connection block (22) of a first of the hydraulic distributors (11) is coupled with the socket of the electronic connection block (22) of a second hydraulic distributor (11).

10. The supply unit (10) according to claims 2 and 9, **characterised in that** the first head unit (14) and/or the second head unit (15) are equipped with a general connector (23) which comprises:
- a first connection element designed to be coupled to an electronic connection block (22);
- a second connection element (24) designed to be electronically connected to an apparatus designed to electronically control the hydraulic distributors (11) of the supply unit (10).
